# EUROPEAN PATENT APPLICATION

(11) **EP 2 187 623 A1**
(43) Date of publication of application: **19.05.2010**
(21) Application number: 09175018.2
(22) Date of filing: 04.11.2009
(51) Int. Cl.: H04N 5/232, G06K 9/00, G03B 13/36

(54) **Autofocus system**

(30) Priority: 14.11.2008 JP 2008292405
(71) Applicant: Fujinon Corporation, Saitama (JP)
(72) Inventor: Takano, Yoshijiro, Saitama Saitama (JP); Matsuura, Yuuji, Saitama Saitama (JP)
(74) Representative: Klunker . Schmitt-Nilson . Hirsch

(57) **Abstract**

An imaging device, an autofocus unit, a focusing-target registration unit, focusing-target specification unit and an authentication unit are provided. The autofocus unit performs focus adjustment of an optical system so that a subject within a certain AF area is in focus. The focusing-target registration unit registers, as information for specifying subjects to be set to a focusing target, character information and image information of the subjects. The focusing-target specification unit specifies a subject, which is a focusing target during taking, from among the registered subjects to be set to the focusing target. The authentication unit determines as to whether or not the subject being taken matches with the specified subject, which is the focusing target. If the authentication unit determines that the subject being taken matches with the specified subject, which is the focusing target, the autofocus unit performs the focus adjustment for the subject being taken.

## Description

### BACKGROUND OF THE INVENTION

### 1. Technical Field

The present invention relates to an autofocus system, and more particularly, to an autofocus system that successively tracks plural subjects as a target for automatic focusing in a camera system that automatically tracks an AF frame.

### 2. Description of the Related Art

In an autofocus (AF) system that automatically focuses a camera, it is necessary to provide the camera with an instruction as to what the camera should focus on. At this time, in general cameras, a position on which the camera is focused is fixed to the center of the image-taking range; for example, the camera is designed so as to focus on a person or the like being in the center of the image-taking range.

However, in the case where a moving subject is shot, it is inconvenient if the position on which the camera is focused is fixed as mentioned above. Accordingly, for the purpose of focusing on a subject in the case where a television camera or the like shoots a scene, such as sports, in which the subject is moving vigorously, JP 2006-267221 A (corresponding to US 2006/0140612 A) describes an autofocus area (AF area) automatic tacking system that brings an AF area to follow the movement of the subject.

Moreover, JP 2004-320286 A (corresponding to US 2004/0207743 A) describes a digital camera that detects an image representative of a person's face from a taken image, and is automatically focused on the face as the subject or automatically changes a zooming magnification so that an area representative of the detected face in the image is enlarged.

### SUMMARY OF THE INVENTION

A system that tracks a specific subject has a mode (referred to as sequence edit mode) in which a target to be tracked is registered in the system and/or deleted from the system, and file information in which the target to be tracked is registered is generally described only by character information. However, in a camera system having a face authentication function, when the file information for specifying the target to be tracked is face registration authentication information, if the file information is only described by character information, a person to be tracked is represented only by his/her name. Consequently, when a cameraman does not link the name with the face, he/she might take an image of a wrong person by mistake.

In view of such circumstances, the invention has been made and provides an autofocus system that enables anyone to easily determine the target to be tracked even if he/she does not link a name with a face, and to track the target without a mistake.
[1] According to an aspect of the invention, an autofocus system includes an imaging device, an autofocus unit, a focusing-target registration, a focusing-target specification unit, a focusing-target specification unit and an authentication unit. The imaging device takes a subject image formed by an optical system. The autofocus unit performs focus adjustment of the optical system so that a subject within a certain AF area is in focus in the image taken by the imaging device. The focusing-target registration unit registers, as information for specifying subjects which are to be set to a focusing target, character information of the subjects and image information of the subjects. The focusing-target specification unit specifies a subject, which is a focusing target during taking of the image, from among the registered subjects, which are to be set to the focusing target. The authentication unit determines as to whether or not the subject being taken matches with the specified subject, which is the focusing target. If the authentication unit determines that the subject being taken matches with the specified subject, which is the focusing target, the autofocus unit performs the focus adjustment for the subject being taken.
   With this configuration, not only the character information representative of the automatic-focusing target but also the image information thereof are registered at the same time. Therefore, by displaying those information, anyone can easily determine the target to be tracked even if he/she does not link names with faces, and the target can be tracked without a mistake.
[2] The autofocus system of [1] may further include a display device that displays the character information and the image information, which are registered as the information for specifying the subject which are to be set to the focusing target.
   As described above, by registering the image information together with the character information and displaying those information at the same time, anyone can easily determine the target to be tracked even if he/she does not link names with faces.
[3] In the autofocus system of [2], the display device may display the character information and the image information of plural ones of the subjects, which are to be set to the focusing target with arranging the character information and the image information of the plural ones in order in which the plural ones are tracked as the target which is to be automatically brought in focus during the taking of the image.
   With this configuration, it is facilitated to sequentially track plural focusing targets.
[4] In the autofocus system of any one of [2] and [3], the display device may include an LCD with a touch panel. When the image information of any of the subjects, which are to be set to the focusing target, is touched, the display device may enlarge and display the touched image information.
   With this configuration, by enlarging and displaying the image information of the focusing target, the target can be more easily confirmed.
[5] In the autofocus system of any one of [1] to [4], the image information of the subject may include a face image of the subject. The authentication unit may perform face authentication.

With this configuration, it is facilitated to sequentially track plural subject persons without a mistake.

As described above, according to any of the above configurations, not only the character information representative of the automatic-focusing target but also the image information thereof is registered at the same time. Therefore, by displaying those information, anyone can easily determine the target to be tracked even if he/she does not link names with faces, and the target can be tracked without a mistake.

### BRIEF DESCRIPTION OF THE DRAWINGS

Fig. 1 is a block diagram showing the overall configuration of a video camera system to which an autofocus system according to a first embodiment of the present invention is applied;
Fig. 2 is an explanatory view showing an example of an edit screen displayed on an LCD with a touch panel in a sequence edit mode; and
Fig. 3 is an explanatory view showing an example of a display screen display on the LCD with the touch panel.

### DETAILED DESCRIPTION OF EMBODIMENTS OF THE INVENTION

Hereinafter, an autofocus system according to exemplary embodiments of the invention will be described in detail with reference to the accompanying drawings.

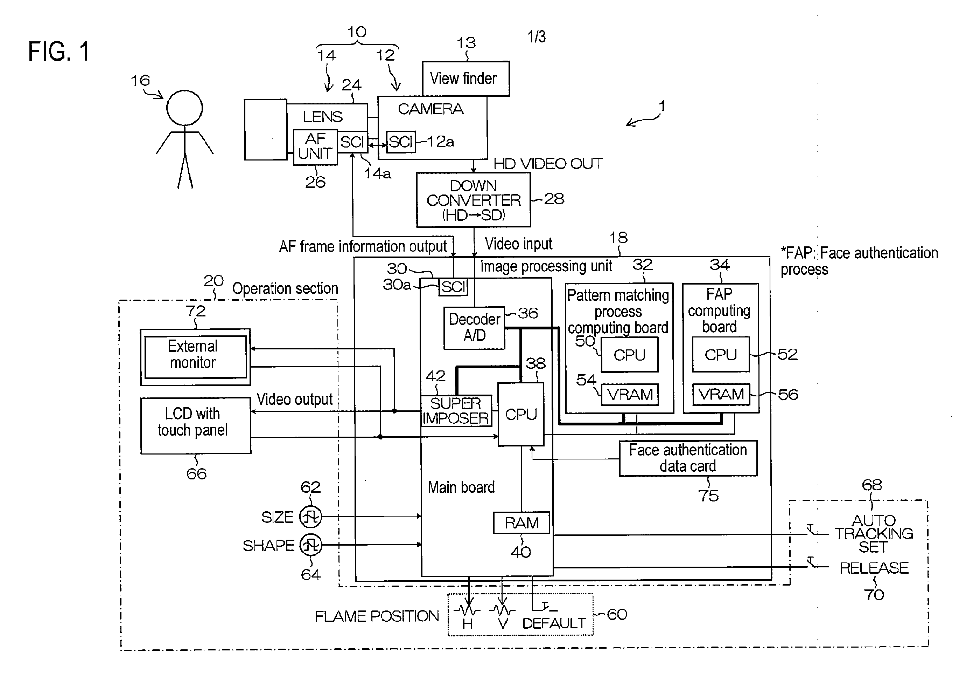

Fig. 1 is a block diagram showing the overall configuration of a video camera system to which the autofocus system according to a first embodiment of the invention is applied. This video camera system is, for example, an imaging system which is used to take images by a broadcasting television camera.

As shown in Fig. 1, the video camera system 1 of the first embodiment includes a television camera 10, an image processing unit 18 and the like.

The television camera 10 includes a camera body 12 which is a high-definition (HD) camera compliant with an high-definition television (HDTV) format and a lens device 14 having a taking lens (optical system) attached to a lens mount of the camera body 12. Although not shown, the camera body 12 is supported so as to be movable in a panning direction and in an upward and downward tilting direction on a pan head.

The camera body 12 includes an imaging device (for example, a CCD) and a necessary signal processing circuit. An image formed by the taking lens of the lens device 14 is photoelectrically converted by the imaging device, undergoes necessary signal processing by the signal processing circuit, and is then output to an outside from an video signal output terminal or the like of the camera body 12 as a video signal of the HDTV format (HDTV signal).

Moreover, the camera body 12 has a viewfinder 13. An image which is currently being taken by the television camera 10 and the like are displayed in the viewfinder 13. Moreover, various pieces of information are displayed in the viewfinder 13. For example, an AF frame which is a target range for focusing in automatic focusing described later is displayed so as to be superimposed on the taken image.

The lens device 14 includes the taking lens (zoom lens) 24 attached to the lens mount of the camera body 12. An image of a subject 16 is formed on an imaging surface of the imaging device of the camera body 12 by the taking lens 24. Although not shown, the taking lens 24 has, as its constituent members, movable members for adjusting image taking conditions such as a focusing lens group, a zoom lens group and an aperture diaphragm. The movable members are electrically driven by a motor (servo mechanism). For example, the focusing lens group and the zoom lens group are moved in an optical axis direction. Focus (subject distance) adjustment is performed by having the focusing lens group move. Also, focal length (zooming magnification) adjustment is performed by having the zoom lens group move.

In systems associated with automatic focusing (AF), other movable members may ones that can be driven only manually so long as at least the focusing lens group can be electrically driven. When a certain movable member is electrically driven according to an operation by an operator, the operation of the movable member is controlled based on a control signal output from non-illustrated operation unit (an operation unit of a controller connected to the lens device 14, etc.) according to the operation by the operator. Detailed description thereof is omitted.

The lens device 14 also includes an AF unit 26 and a non-illustrated lens CPU. The lens CPU performs centralized control of the entire lens device 14. The AF unit 26 includes a processor that acquires information required to perform focus control (automatic focus adjustment) by AF, and although not shown, is formed of an AF processor and an AF imaging circuit. The AF imaging circuit is disposed in the lens device 14 to acquire video signals for AF processing, and includes an imaging device (referred to as AF imaging device) such as an imaging device CCD and a processing circuit that outputs an output signal of the AF imaging device as a video signal in a certain format. The video signal output from the AF imaging circuit is a brightness signal.

Subject light branching off from the subject light being incident on the imaging device of the camera body 12 by a half mirror or the like disposed on an optical path of the taking lens 24 forms an image on the imaging surface of the AF imaging device,. An image-taking range and a subject distance (a distance to a subject that is in focus) for an imaging area of the AF imaging device are configured to coincide with an image-taking range and a subject distance for an imaging area of the imaging device of the camera body 12. A subject image taken by the AF imaging device coincides with a subject image taken by the imaging device of the camera body 12. It is not necessary that these image-taking ranges completely coincide with each other. For example, the image-taking range of the AF imaging device may be a larger range containing the image-taking range of the imaging device of the camera body 12.

The AF processor acquires video signals from the AF imaging circuit, and calculates a focal point evaluation value representative of a value of contrast of the subject image based on the video signals. For example, after extracting signals of high-frequency components of the video signals acquired from the AF imaging device by a high-pass filter, the AF processor integrates signals, in a range corresponding to the AF area for which AF is to be performed, among the high-frequency component signals for each screen (for each frame). The integration value obtained for each screen in this way represents the value of the contrast of the subject image, and is supplied to the lens CPU as the focal point evaluation value.

The lens CPU acquires the information of the AF frame (AF frame information) representative of a range (outline) of the AF area from the image processing unit 18 as described later and designates, to the AF processor as the AF area, a range within the AF frame specified by the AF frame information. Then, the lens CPU acquires, from the AF processor, the focal point evaluation value, which is obtained from the image (video signals) in the AF area.

In this manner, the focal point evaluation value is acquired from the AF processor every time one screen of video signals are acquired from the AF imaging circuit (every time the focal point evaluation value is obtained by the AF processor), and the focusing lens group is controlled so that the acquired focal point evaluation value becomes maximum (local maximum), that is, so that the contrast of the subject image within the AF frame becomes highest. Examples of the focusing lens group control method based on the focal point evaluation value include a hill-climbing method. With this method, the focusing lens group is moved in a direction that increases the focal point evaluation value, and when a point where the focal point evaluation value starts to decrease is detected, the focusing lens group is set in this position. Thereby, the camera is automatically focused on the subject within the AF area.

While the above-described AF processor acquires the video signals from the AF imaging device mounted on the lens device to calculate the focal point evaluation value, it may acquire video signals of the image taken by the imaging device of the camera body 12 from the camera body 12. An AF mechanism for automatically focusing the camera on the subject within the AF frame may be any one.

For connection between the camera body 12 and the lens device 14 and for connection between the lens device 14 and the image processing unit 18 described later, serial communication connectors provided on the respective devices are connected directly or through a cable or the like. Thereby, the camera body 12 and the lens device 14 transmit and receive various pieces of information by serial communication through serial communication interfaces (SCIs) 12a and 14a provided on the camera body 12 and the lens device 14, respectively. Moreover, the lens device 14 and the image processing unit 18 transmit and receive various pieces of information by serial communication between serial communication interfaces 14a and 30a which are provided on the lens device 14 and the image processing unit 18, respectively.

A video output connector of the camera body 12 and a video input connector of the image processing unit 18 are connected by a cable through a down converter 28. Thereby, the HDTV signal output from the video output connector of the camera body 12 is input to the image processing unit 18 after down-converted into an NTSC (National Television System Committee) video signal (SDTV signal) by the down converter 28.

Although described later in detail, the image processing unit 18 face-authenticates a subject person in the taken subject image. If the person is recognized as a subject (focus target) that is set so as to be automatically tracked while being automatically brought in focus, the image processing unit 18 performs autofocus control for the lens device 14 through the AF unit 26.

To perform the face authentication and determine as to whether or not the subject, which is currently take, is a target to be automatically tracked while being automatically brought in focus, the image is not necessarily a high-definition image of an HDTV signal, but may be an image of an NTSC signal (SDTV signal). For this reason, the HDTV signal output from the camera body 12 is converted into an SDTV signal by the down converter 28 as described above.

The image processing unit 18 is a device that specifies the range (position, size, and shape (aspect ratio)) of the AF frame when the AF unit 26 of the lens device 14 performs focus control by AF as described above. The AF frame information specifying the range of the AF frame in the image (taken image screen) taken by the television camera 10 is supplied from the image processing unit 18 to the lens device 14 by the above-described serial communication. The AF unit 26 sets the range of the AF frame based on the AF frame information acquired from the image processing unit 18, and performs the AF processing as described above.

The image processing unit 18 mainly includes a main board 30, a pattern matching process computing board 32 and a face authentication process computing board 34. The main board 30, the pattern matching process computing board 32 and the face authentication process computing board 34 are provided with CPUs 38, 50 and 52, respectively, and an individual arithmetic processing is performed by each board. The CPUs 38, 50 and 52 are connected by buses and control lines so that data can be exchanged among them and operations can be synchronized with each other. Moreover, the image processing unit 18 has a face authentication data card 75 that stores face authentication data used to perform face authentication.

The processing in the image processing unit 18 is centralizedly performed on the main board 30. The SCI 30a, a decoder (A/D converter) 36, a superimposer 42, a RAM 40 and the like are provided on the main board 30 as well as the CPU 38 performing arithmetic processing.

The SCI 30a is an interface circuit for performing serial communication with the SCI 14a of the lens device 14 as described above, and transmits the AF frame information and the like to the lens device 14.

The decoder 36 is a circuit for converting the video signal (SDTV signal) of the image, which is taken by the television camera 10 and input from the down converter 28 to the image processing unit 18, into data that is digital processible in the image processing unit 18, and performs A/D conversion to convert the analog SDTV signal into a video signal of digital data.

The RAM 40 is a memory temporarily storing data used for the arithmetic processing by the CPU 38.

The pattern matching process computing board 32 and the face authentication process computing board 34 are arithmetic processing boards for individually performing pattern matching and face detection/authentication, and are provided with VRAMs 54 and 56 temporarily storing image data as well as the CPUs 50 and 52 performing arithmetic processing, respectively.

An operation section 20 is integrally provided on the image processing unit 18. Alternatively, a part of the operation section 20 or all of operation members are provided in a device which is separate from the image processing unit 18 and are connected by a cable or the like.

Although not described in detail, the operation section 20 includes a position operation member 60, a size operation member 62, a shape operation member 64, a tracking start switch 68 and a tracking stop switch 70. The position operation member 60 (for example, a joystick or a trackball) moves the position of the AF frame upward, downward, rightward and leftward by a user's manual operation. The size operation member 62 (for example, a knob) changes the size of the AF frame by a manual operation. The shape operation member 64 (for example, a knob) changes the shape of the AF frame by a manual operation. The tracking start switch 68 provides an instruction to start automatic tracking. The tracking stop switch 70 provides an instruction to stop automatic tracking. Setting conditions of the operation members 60, 62, 64, 68 and 70 are read out by the CPU 38 of the main board 30 in the image processing unit 18.

An LCD 66 with a touch panel is configured so that settings of a mode associated with the automatic tracking of the AF frame and the like can be input by a touch operation. An image which is displayed on the LCD 66 by the CPU 38 of the image processing unit 18 can be switched appropriately in accordance with contents of the settings.

The image, which is displayed on the LCD 66 with the touch panel, is provided through the superimposer 42 of the main board 30. In the superimposer 42, the video signal of the image, which is taken by the television camera 10 and is supplied from the decoder 36, can be superimposed on the image signal generated by the CPU 38. Thereby, similarly to the viewfinder 13 set in the camera body 12, an image where the image being taken by the television camera 10 and the image of the currently set AF frame are superimposed on each other can be displayed on the LCD 66 with the touch panel. By a touch operation on this screen, a user can perform operations similar to those performed with the operation members 60, 62, 64, 68 and 70.

The operation section 20 includes an external monitor 72 as well as the LCD 66 with the touch panel, and the same image as that displayed on the LCD 66 with the touch panel is displayed on the external monitor 72. The external monitor 72 is configured so that a person other than a cameraman, for example, a focusman can input instructions appropriately by the touch panel function while viewing the external monitor 72.

This embodiment is configured to introduce not only characters but also vide information into the face registration authentication information, so that any one can easily determine a target to be tracked even if he/she does not link a name with a face, and it is prevented to make a mistake in taking an image.

Particularly, this embodiment is configured as follows. In the sequence edit mode in which authentication data is specified from among the registered authentication data, and a sequence of the authentication data is set so as to track a focusing target while sequentially switching the target, character data representing the target to be tracked is displayed with a face image of the target being added so that it becomes possible to easily specify the target and to switch the target to be tracked.

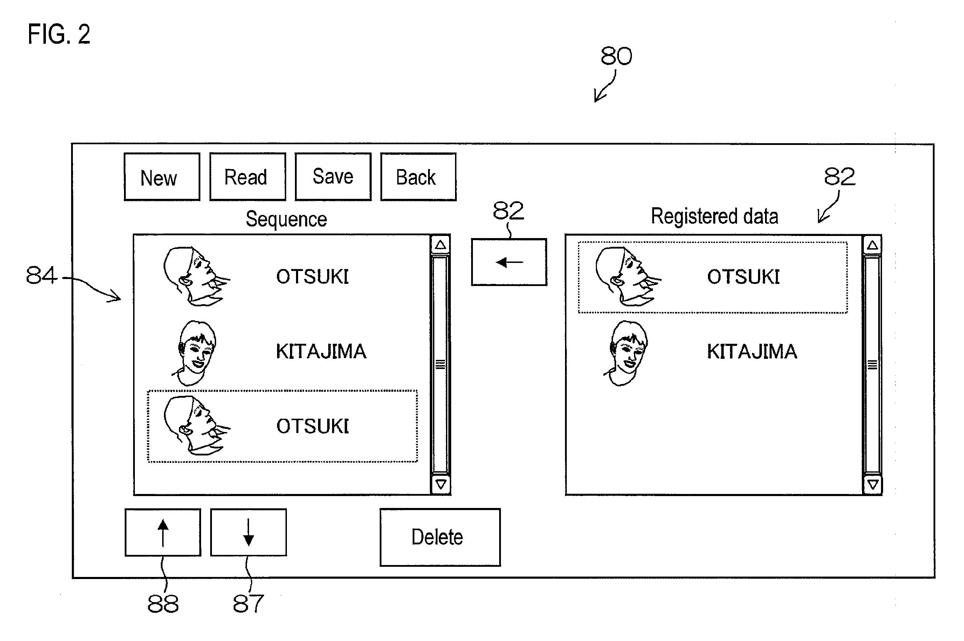

Fig. 2 shows an example of an edit screen 80 displayed on the LCD 66 with the touch panel in the sequence edit mode.

Through the display screen displayed on the LCD 66 with the touch panel, an operator specifies the sequence of the targets, which are to be tracked while being brought in focus, from among the targets, which are pre-registered in the face authentication data card 74.

In the edit screen 80 shown in Fig. 2, a registered data column 82 is displayed on the right side, and a sequence column 84 showing the targets to be tracked in order from above is displayed on the left side. It is assumed that two persons "OTSUKI" and "KITAJIMA" are pre-registered in the registered data column 82 on the right side as shown in the figure. It is also assumed that the targets to be tracked are specified in order from above so that "OTSUKI" is tracked first and "KITAJIMA" is tracked next as shown in the sequence column 84 on the left side.

When the operator selects "OTSUKI" from the registered data column 82 on the right side and touches a leftward-pointing arrow 86, specification is made so that "OTSUKI" is specified again and set to the third position from the above in the sequence column 84 on the left side so that "OTSUKI" becomes the target to be tracked next to "KITAJIMA".

When the operator specifies the sequence of the targets to be tracked as described above, data regarding this sequence is input to the CPU 38 of the main board 30 from the face authentication data card 74, and the CPU 38 sends data representative of the specified targets to be tracked to the face authentication operation board 34 according to the sequence.

The CPU 52 of the face authentication operation board 34 checks subjects which are taking-targets represented by video signals which are currently being taken and sent from the camera body 12, against the data representative of the specified target to be tracked.

The face authentication by the face authentication operation board 34 may be implemented by a known face authentication technology. For example, feature points are extracted from the taken subject according to a predetermined algorithm. Examples of the extracted feature points include outlines, orientations and positions of the person's eyes, pupils, eyebrows, nose, mouth, ears and the like, a ratio among distances between these elements, sizes, hairstyle and presence or absence of a beard and glasses. By comparing these factors with the registered data, it is determined as to whether or not the subject is the same person as any of persons who are represented by the registered data.

It is assumed that, as shown in the sequence column 84 on the right side of the edit screen 80 of Fig. 2, specification is made so that in order from above, "OTSUKI" is tracked first, "KITAJIMA" is tracked next and then, "OTSUKI" is tracked again. This is, for example, the case where a sequence is confirmed in advance at a camera rehearsal or the like in shooting a television program, and a tracking sequence is specified.

When shooting is started, first, shooting is performed so that "OTSUKI" at the top is in focus. The scene changes as the program proceeds, and at a point of time when the next person "KITAJIMA" is to be brought into focus, an operator touches a downward-pointing arrow 87 in the display screen (edit screen 80) displayed on the LCD 66 with the touch panel. Then, the specification of the target to be tracked is switched from "OTSUKI" to "KITAJIMA".

The instruction to switch the target to be tracked from "OTSUKI" to "KITAJIMA" is sent from the operation section 20 to the CPU 38 of the main board 30 of the image processing unit 18.

The CPU 38 face-authenticates a person of the video data sent from the camera body 12 through the decoder 36 based on the face authentication data of "KITAJIMA", which is sent from the face authentication data card 74 to the face authentication operation board 34 in accordance with this instruction, authenticates "KITAJIMA", and starts tracking.

That is, when it is determined that the person who is currently being taken is "KITAJIMA", the CPU 38 of the main board 30 provides an instruction to the lens device 14 through the serial communication interface (SCI) 30a and the serial communication interface (SCI) 14a of the lens device 14, and controls the lens device 14 so that "KITAJIMA" is tracked while being brought in focus.

As described above, when the operator touches the downward-pointing arrow 87 in the display screen (edit screen 80) displayed on the LCD 66 with the touch panel, control is successively switched to the next target to be tracked.

At this time, when the operator touches an upward-pointing arrow 88 in the display screen (edit screen 80) displayed on the LCD 66 with the touch panel, the immediately preceding target to be tracked in the sequence is selected, and the lens device 14 is controlled so that the immediately preceding target to be tracked is in focus.

As described above, in this embodiment, the registered data and the targets to be tracked, which are specified in the sequence, are displayed with not only the character data, such as names, but also face images. Therefore, even if names are not linked to faces, anyone can easily make determination, so that it can be prevented that an image of a wrong person is taken by mistake.

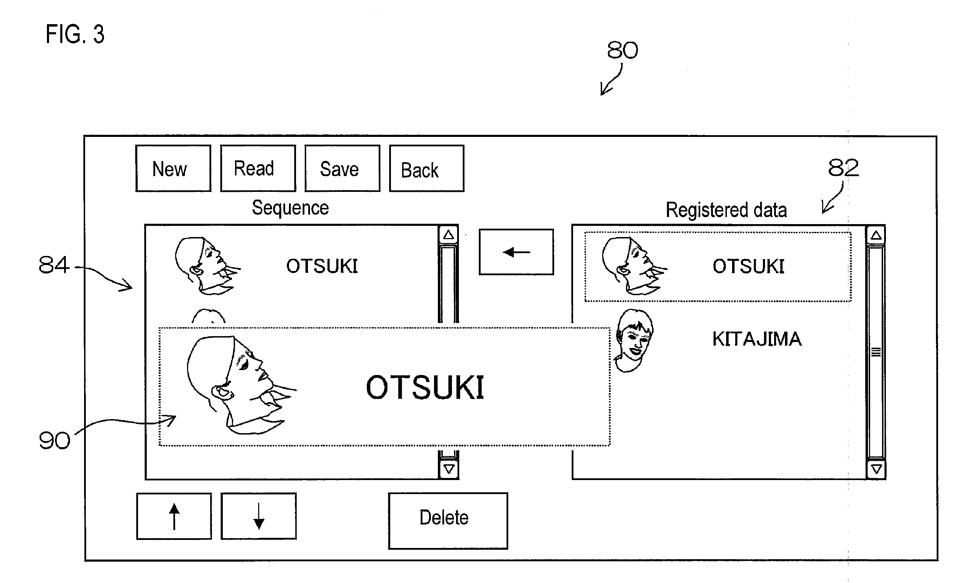

Moreover, at this time, when a target to be tracked displayed in the display screen of the LCD 66 with the touch panel is touched so that it is enlarged as shown in a dash-line box 90 in Fig. 3, the target to be tracked can be more clearly confirmed. Thereby, the target to be tracked can be easily determined, so that mistakes can be prevented.

Moreover, the accuracy of the face authentication data may be improved using not one image for each person but plural images for each person (for example, up to five clips for each person). Accordingly, plural pieces of data for each target may all be provided in one folder and displayed as folder information.

While face authentication is described as an example in the above embodiment, what is authenticated is not limited to the face, but may be image information of an object such as object authentication.

That is, by registering the image information of a subject object, which is a target to be tracked, together with the character information for specifying the subject object and displaying the image information and the character information, the target to be tracked can be clearly confirmed using not only mere the character information but also the image information.

While the autofocus system of the invention has been described in detail, the invention is not limited to the above-described examples. It is to be noted that various improvements and modifications may be made without departing from the gist of the invention.

## Claims

1. An autofocus system comprising:
an imaging device that takes a subject image formed by an optical system;
an autofocus unit that performs focus adjustment of the optical system so that a subject within a certain AF area is in focus in the image taken by the imaging device;
a focusing-target registration unit that registers, as information for specifying subjects which are to be set to a focusing target, character information of the subjects and image information of the subjects;
a focusing-target specification unit that specifies a subject, which is a focusing target during taking of the image, from among the registered subjects, which are to be set to the focusing target; and
an authentication unit that determines as to whether or not the subject being taken matches with the specified subject, which is the focusing target, wherein
if the authentication unit determines that the subj ect being taken matches with the specified subject, which is the focusing target, the autofocus unit performs the focus adjustment for the subject being taken.

2. The autofocus system according to claim 1, further comprising:
a display device that displays the character information and the image information, which are registered as the information for specifying the subject which are to be set to the focusing target.

3. The autofocus system according to claim 2, wherein the display device displays the character information and the image information of plural ones of the subjects, which are to be set to the focusing target with arranging the character information and the image information of the plural ones in order in which the plural ones are tracked as the target which is to be automatically brought in focus during the taking of the image.

4. The autofocus system according to any one of claims 2 to 3, wherein
the display device includes an LCD with a touch panel, and
when the image information of any of the subjects, which are to be set to the focusing target, is touched, the display device enlarges and displays the touched image information.

5. The autofocus system according to any of claims 1 to 4, wherein
the image information of the subject includes a face image of the subject, and
the authentication unit performs face authentication.
